## Europäisches Patentamt

## European Patent Office

## Office européen des brevets

(11) Veröffentlichungsnummer: **0 386 577**
**A2**

# (12) EUROPÄISCHE PATENTANMELDUNG

(21) Anmeldenummer: **90103687.1**

(22) Anmeldetag: **26.02.90**

(51) Int. Cl.5: **B29C 33/36, B29C 53/62, B29D 23/00**

(30) Priorität: **10.03.89 DE 3907782**

(43) Veröffentlichungstag der Anmeldung:
**12.09.90 Patentblatt 90/37**

(84) Benannte Vertragsstaaten:
**AT BE CH DE ES FR GB IT LI NL SE**

(71) Anmelder: **BASF Aktiengesellschaft**
**Carl-Bosch-Strasse 38**
**D-6700 Ludwigshafen(DE)**

(72) Erfinder: **Schuermann, Helmut**
**Burgunderstrasse 13**
**D-6701 Maxdorf(DE)**
Erfinder: **Minor, Roman**
**Scheffelstrasse 4**
**D-6711 Laumersheim(DE)**

(54) **Anlage zur Herstellung rohrförmiger Bauteile aus faserverstärktem Kunststoff.**

(57) Die Anlage zur Herstellung rohrförmiger Bauteile aus faserverstärktem Kunststoff umfaßt eine Einrichtung, mit der Faserstränge mit Kunststoff getränkt werden, in eine Wickelmaschine einspannbare Wickeldorne (1), auf denen die getränkten Faserstränge abgelegt werden, wobei die Wickelmaschine ein oder mehrere parallel zu den Dornen hin und her bewegliche(s) Fadenauge(n) (3, 4) aufweist, und eine zweistrangig ausgebildete Transporteinrichtung (2), mit der die gewickelten Bauteile durch einen Härteofen (7), zu einer Einrichtung zum Herausziehen der Wickeldorne aus den gehärteten Bauteilen und gegebenenfalls zu einer Nachbearbeitungsstation befördert werden und mit der die leeren Wickeldorne wieder über eine Dornvorbereitungsstation zur Wickelstation zurücktransportiert werden. Zwecks kontinuierlicher Fertigung der Bauteile sowie für eine hohe Produktionsgeschwindigkeit sind die Wickedorne (1) in den Strängen (2a) und (2b) der Transporteinrichtung (2) fliegend gelagert, wobei die freien Enden der Dorne einander zugekehrt sind. Die Stränge (2a) und (2b) sind unabhängig voneinander und schrittweise entsprechend dem Abstand zwischen zwei oder mehreren Dornen (1) eines Stranges bewegbar.

## Anlage zur Herstellung rohrförmiger Bauteile aus faserverstärktem Kunststoff

Zur Darstellung der Erfindungsgattung ist im Oberbegriff des Anspruchs 1 von einer bekannten Anlage im Sinne der DE-PS 34 40 740 ausgegangen worden, mit der bisher rohrförmige Bauteile automatisch hergestellt wurden. Die Herstellung der Bauteile erfolgt jedoch diskontinuierlich, d.h. der Wickelvorgang muß in regelmäßigen Abständen unterbrochen werden.

Mit der Erfindung sollen derartige Bauteile kontinuierlich hergestellt werden und es soll eine hohe Produktionsgeschwindigkeit ermöglicht werden.

Diese Aufgabe wird durch die im Kennzeichen des Anspruchs 1 enthaltenen Maßnahmen gelöst.

Zwar sind die hier verwendeten fliegend gelagerten Wickeldorne zur Fertigung mehrerer Bauteile in einem kontinuierlichen Wickelprozeß an sich bekannt (Modern Plastics Encyclopedia, 1982-1983, S. 363). Jedoch müssen diese Wickeldorne einzeln in die Wickelmaschine eingespannt bzw. aus dieser entnommen werden. Das bedeutet, daß der Dornwechsel die Produktionsgeschwindigkeit limitiert.

Die Erfindung wird nachstehend anhand der Zeichnungen erläutert. Es zeigt

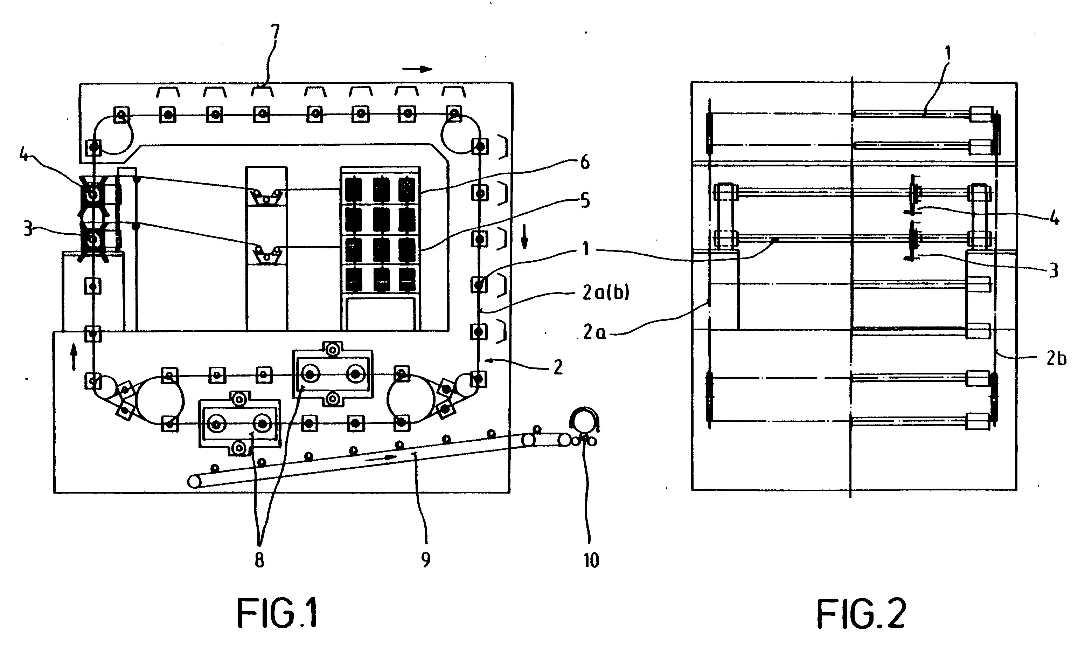

Figur 1 eine Seitenansicht einer Anlage zur Herstellung rohrförmiger Bauteile in schematischer Darstellung,

Figur 2 eine Vorderansicht der Anlage entsprechend Figur 1.

In der Zeichnung sind die Wickeldorne mit (1) bezeichnet. Sie sind in der dargestellten Ausführung der Produktionsanlage in einen umlaufenden, aus zwei Strängen (2a) und (2b) bestehenden Kettenförderer (2), integriert, d.h. sie sind einseitig fliegend und drehbar in einem Aufnahmezapfen gelagert, der, von einer umlaufenden Kette bewegt, in Führungen gleitet. Die Wickeldorne verbleiben immer in ihrem jeweiligen Aufnahmezapfen. Es ist somit nirgendwo eine Vorrichtung notwendig, die Dorne zu wechseln und neu einzusetzen.

Das Ausführungsbeispiel zeigt eine Anlage mit zwei Ringfadenaugen (3) und (4). Es sind natürlich auch ein einziges, bzw. auch mehrere Ringfadenaugen gleichzeitig einsetzbar. Die Fertigungsgeschwindigkeit richtet sich nach der Anzahl der Ringfadenaugen. Werden mit z.B. zwei Ringfadenaugen die gleichen Faserarten verwickelt, so werden immer zwei Bauteile gleichzeitig fertig, und der Förderer taktet um zwei Wickeldorne weiter. Andererseits können die Spulenständer (5, 6), wie in der Zeichnung angedeutet, auch mit unterschiedlichen Fasertypen bestückt werden, so odaß mit dem einen Ringfadenauge (3) die ersten Schichten des Bauteils gewickelt werden und mit dem anderen Ringfadenauge (4) die Abschlußschichten. Diese Schichtenfolge ist von großer praktischer Bedeutung, da man bei vielen Faserverbundbauteilen eine Deck-Schutzschicht, z.B. mit Polyestergewebeband aufbringt. Der Antrieb der Wickeldorne in der Position des Bewickeltwerdens erfolgt über Reibradantriebe.

Nach dem Bewickeln und Durchtrennen der Fasern werden die bewickelten Dorne durch die Gelier- und Härtestrecke (7) gefördert. Die Härtung kann mittels UV-Strahlern oder aber thermisch durch Infrarotstrahler, Mikrowelle oder Umluft durchgeführt werden. Damit während des Härtens das duromere Matrixmaterial nicht abtropft, muß der Wickeldorn bei den ersten Härtungsstationen ständig in Rotation gehalten werden. Der Antrieb der Kerne erfolgt auch hier über Reibräder.

Die Länge der Härtestrecke richtet sich nach der Härtedauer des verwendeten Matrixharzes. Am Ende der Härtestrecke befindet sich eine Abziehvorrichtung (8). Hier werden die Bauteile von den in den Aufnahmezapfen verbleibenden Wickeldornen abgezogen. Die Kraft zum Ausziehen wird durch Hydraulikzylinder aufgebracht. An die Hydraulikzylinder ist eine zweigeteilte ringförmige Blende angebracht, die zum Abziehen hinter das gehärtete Bauteil greift. Die Abziehvorrichtungen für die beiden Förderstränge sind versetzt montiert, damit das jeweils abgezogene Bauteil frei auf ein Förderband (9) fallen kann, mit dem es zu einer weiteren Bearbeitungsstation (10) transportiert wird. Die Bearbeitungsstation besteht im wesentlichen aus zwei auf einer Welle befindlichen diamantbesetzten Sägeblättern, mit denen in einem Schneidehub die Enden des Wickelbauteils mit den durch das Wenden beim Wickeln erzeugten Aufdickungen abgetrennt werden. Nach dem Abziehvorgang kann u.U. noch eine Dornreinigung vorgesehen sein. Die gereinigten und mit einem Trennmittel versehenen Wickeldorne werden weitergetaktet und gelangen so in die Positionen, in denen sie mittels der Ringfadenaugen (3, 4) erneut bewickelt werden.

## Ansprüche

Anlage zur Herstellung rohrförmiger Bauteile aus faserverstärktem Kunststoff mit einer Einrichtung, mit der Faserstränge mit Kunststoff getränkt werden, mit in eine Wickelmaschine einspannbaren Wickeldornen, auf denen die getränkten Faserstränge abgelegt werden, wobei die Wickelmaschine ein parallel zu den Dornen hin und her bewegliches Fadenauge für die aufzuwickelnden Faserstränge aufweist, und mit einer zweistrangig ausgebildeten Transporteinrichtung, mit der die gewickelten Bauteile durch einen Härteofen zu einer Einrichtung zum Herausziehen der Wickeldorne aus den gehärteten Bauteilen und gegebenenfalls zu einer Nachbearbeitungsstation befördert werden und mit der die leeren Wickeldorne wieder über eine Dornvorbereitungsstation zur Wickelstation zurücktransportiert werden, dadurch gekennzeichnet, daß die Wickeldorne (1) in den Strängen (2a) und (2b) der Transporteinrichtung (2) fliegend gelagert sind, wobei die freien Enden der Dorne einander zugekehrt sind, und daß die Stränge unabhängig voneinander und schrittweise entsprechend dem Abstand zwischen zwei oder mehreren Dornen eines Stranges bewegbar sind.

**FIG.2**

**FIG.1**